# EUROPEAN PATENT APPLICATION

(11) **EP 2 821 918 A1**
(43) Date of publication of application: **07.01.2015**
(21) Application number: 13755452.3
(22) Date of filing: 18.02.2013
(51) Int. Cl.: G06F 9/445

(54) **DEVICE FOR CREATING SYSTEM CONSTRUCTION PROCEDURE, METHOD FOR CREATING SYSTEM CONSTRUCTION PROCEDURE, AND PROGRAM**

(30) Priority: 01.03.2012 JP 2012045761
(71) Applicant: NEC Corporation, Tokyo 108-8001 (JP)
(72) Inventor: SOEJIMA, Kenji, Tokyo 108-8001 (JP)
(74) Representative: Vossius & Partner
(86) International application number: PCT/JP2013/000880
(87) International publication number: WO 2013/128838

(57) **Abstract**

A construction procedure of a system which is constructed by performing operations of plural types with respect to each of plural program modules is generated. A system-construction-procedure generating device (100) includes a dependency relationship storing unit (111), an operating procedure storing unit (112), and an operating procedure generating unit (102). The dependency relationship storing unit (111) stores dependency relationship information (121) indicating a dependency relationship (123) for each of one or more pairs of operations among a plurality of operations each expressed with a combination of one of a plurality of program modules and one of a plurality of operation types, the plurality of operations being required for system construction. The operating procedure storing unit (112) stores a procedure sequence (122) indicating a sequence for performing each of the plurality of operations. The operating procedure generating unit (102) updates the procedure sequence (122) in such a way that each of the one or more dependency relationships (123) indicated by the dependency relationship information (121) is satisfied, and outputs the updated procedure sequence (122), when the dependency relationship information (121) is updated

## Description

### Technical Field

The present invention relates to a system-construction-procedure generating device, a system-construction-procedure generating method, and a program thereof.

### Background Art

In recent years, as a request for reducing an operation cost of a computer system (hereinafter, referred to as a system) becomes strong, it is progressed to automate various operation processes of the system. One example is automatic construction of the system. The system has been constructed by carrying out a process that a person who develops the system or the like creates a construction-procedure instruction manual, and a person who is in charge of system construction or the like carries out a construction work on the basis of the construction-procedure instruction manual. Then, in order to automate the above-mentioned process, an approach, in which the person who develops the system or the like creates a workflow to construct the system automatically on the basis of the workflow, has been adopted.

Meanwhile, as the system becomes complicated, maintenance of the workflow becomes difficult, and as a result, a problem that the workflow is defined erroneously, and modification of the workflow becomes difficult has been caused. To cope with the problem, an approach to generate a system-construction-procedure on the basis of a dependency relationship between program modules included in the system, which is a construction target, has been proposed.

A technology to generate the system-construction-procedure on the basis of the dependency relationship between the program modules is disclosed, for example, in a patent literature 1. According to the technology disclosed in the patent literature 1, in the case that a plurality of software components (program modules) included in the system are activated, a sequence for activating the components is determined on the basis of weighted dependency information of each software component, and each component is activated according to the determined sequence for activation.

### [Citation List]

### [Patent Literature]

[Patent Literature 1] Japanese Patent Application Laid-Open No. 2011-43932

### Summary of Invention

### [Technical Problem]

In the case of constructing the system, there is a case that operations of plural types such as installation, activation, or the like are requested for each of plural program modules. In this case, whether each operation of one program can be performed may depend on whether another operation of the program or each operation of another program has been performed.

However, according to the technology disclosed in the patent literature 1 mentioned above, the sequence for activating each program is determined on the basis of the dependency relationship on activation of the plural program modules, and consequently the technology cannot be applied to a system in which it is requested to perform operations of plural types with respect to each of the plural program modules.

An object of the present invention is to provide a system-construction-procedure generating device, a system-construction-procedure generating method, and a program thereof for generating a construction procedure of a system which is constructed by performing operations of plural types with respect to each of plural program modules.

### [Solution to Problem]

A system-construction-procedure generating device according to an exemplary aspect of the invention includes: a dependency relationship storing means for storing dependency relationship information indicating a dependency relationship for each of one or more pairs of operations among a plurality of operations each expressed with a combination of one of a plurality of program modules and one of a plurality of operation types, the plurality of operations being required for system construction; an operating procedure storing means for storing a procedure sequence indicating a sequence for performing each of the plurality of operations; and an operating procedure generating means for updating the procedure sequence in such a way that each of the one or more dependency relationships indicated by the dependency relationship information is satisfied, and outputting the updated procedure sequence, when the dependency relationship information is updated.

A system-construction-procedure generating method according to an exemplary aspect of the invention includes: storing dependency relationship information indicating a dependency relationship for each of one or more pairs of operations among a plurality of operations each expressed with a combination of one of a plurality of program modules and one of a plurality of operation types, the plurality of operations being required for system construction; storing a procedure sequence indicating a sequence for performing each of the plurality of operations; and updating the procedure sequence in such a way that each of the one or more dependency relationships indicated by the dependency relationship information is satisfied, and outputting the updated procedure sequence, when the dependency relationship information is updated.

A computer readable storage medium according to an exemplary aspect of the invention, records thereon a program, causing a computer to perform a method including: storing dependency relationship information indicating a dependency relationship for each of one or more pairs of operations among a plurality of operations each expressed with a combination of one of a plurality of program modules and one of a plurality of operation types, the plurality of operations being required for system construction; storing a procedure sequence indicating a sequence for performing each of the plurality of operations; and updating the procedure sequence in such a way that each of the one or more dependency relationships indicated by the dependency relationship information is satisfied, and outputting the updated procedure sequence, when the dependency relationship information is updated.

### [Advantageous Effect of Invention]

An advantageous effect of the present invention is that it is possible to generate a construction procedure of a system which is constructed by performing operations of plural types with respect to each of plural program modules.

### Brief Description of Drawings

Fig. 1 is a block diagram showing a characteristic configuration according to a first exemplary embodiment of the present invention.
Fig. 2 is a block diagram showing a configuration of a system-construction-procedure generating device 100 in the first exemplary embodiment of the present invention.
Fig. 3 is a flowchart showing a process which is carried out by the system-construction-procedure generating device 100 in the first exemplary embodiment of the present invention.
Fig. 4 is a flowchart showing details of a procedure sequence updating process (Step S105) in the first exemplary embodiment of the present invention.
Fig. 5 is a flowchart (continuation of Fig. 4) showing details of the procedure sequence updating process (Step S105) in the first exemplary embodiment of the present invention.
Fig. 6 is a diagram showing an operation which is performed with respect to a module, and status transition of the module which is brought about by the operation in the first exemplary embodiment of the present invention.
Fig. 7 is a diagram showing an example of a type of a dependency relationship in the first exemplary embodiment of the present invention.
Fig. 8 is a diagram showing examples of dependency relationship information 121 and a procedure sequence 122 in the first exemplary embodiment of the present invention.
Fig. 9 is a diagram showing other examples of the dependency relationship information 121 and the procedure sequence 122 in the first exemplary embodiment of the present invention.
Fig. 10 is a diagram showing an example of an output screen 200 in the first exemplary embodiment of the present invention.
Fig. 11 is a diagram showing an example of updating the procedure sequence 122 in the procedure sequence updating process in the first embodiment of the present invention.
Fig. 12 is a diagram showing another example of updating the procedure sequence 122 in the procedure sequence updating process in the first exemplary embodiment of the present invention.
Fig. 13 is a flowchart showing a process which is carried out by a system-construction-procedure generating device 100 in a second exemplary embodiment of the present invention.
Fig. 14 is a diagram showing examples of dependency relationship information 121 and a procedure sequence 122 in the second exemplary embodiment of the present invention.
Fig. 15 is a diagram showing other examples of the dependency relationship information 121 and the procedure sequence 122 in the second exemplary embodiment of the present invention.
Fig. 16 is a diagram showing an example of an output screen 200 in the second exemplary embodiment of the present invention.
Fig. 17 is a diagram showing other examples of the dependency relationship information 121 and the procedure sequence 122 in the second exemplary embodiment of the present invention.
Fig. 18 is a diagram showing other examples of the dependency relationship information 121 and the procedure sequence 122 in the second exemplary embodiment of the present invention.
Fig. 19 is a diagram showing another example of the output screen 200 in the second exemplary embodiment of the present invention.

### Description of Embodiments

### (First exemplary embodiment)

Next, a first exemplary embodiment of the present invention will be explained.

Firstly, an operation which is performed in system construction, and a dependency relationship 123 which is set between operations in the first exemplary embodiment of the present invention will be described.

According to the first exemplary embodiment of the present invention, a computer system, which is a construction target, includes a plurality of program modules (hereinafter, referred to as modules), and one or more operations out of operations of plural types are performed with respect to each of the plural modules.

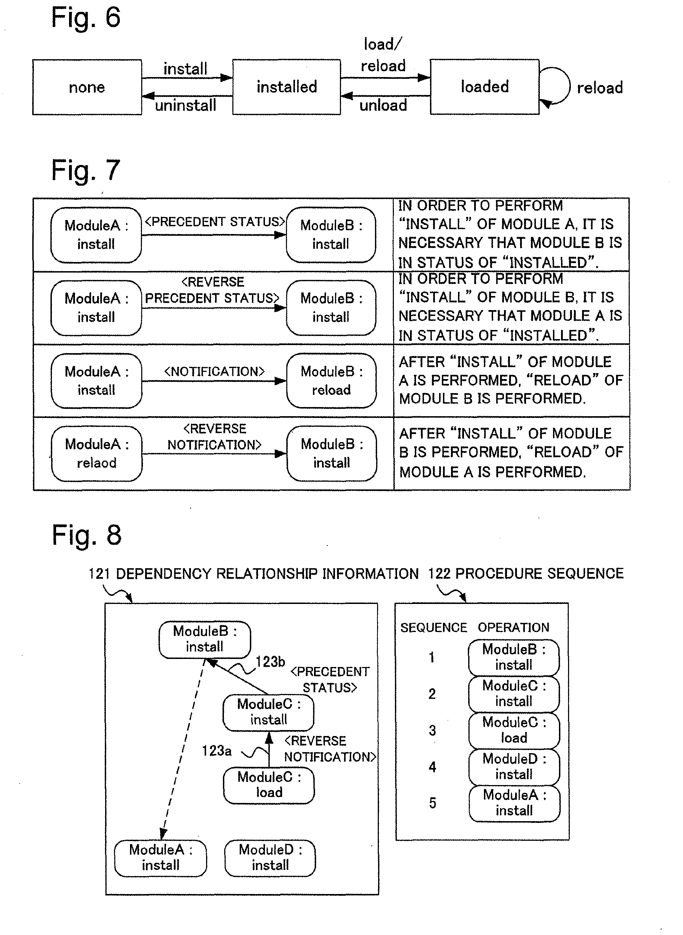

Fig. 6 is a diagram showing an operation which is performed with respect to the module, and a status transition of the module which is brought about by the operation in the first exemplary embodiment of the present invention.

According to the first exemplary embodiment of the present invention, "install", "uninstall", "load", "unload ", and "reload" are used as the operation type.

Here, "install" means an operation to arrange a module in an external storage device or the like of a computer included in a system, so that the module is ready to be loaded. As shown in Fig. 6, when "install" is completed, the status of the module transits to "installed (installed already)".

"Uninstall" means an operation to delete a module, which has been already installed, from the external storage device or the like. When "uninstall" is completed, the status of the module transits to "none".

"Load" means an operation to put an installed module into a memory or the like of the computer and to activate a process of the module. When "load" is completed, the status of the module transits to "loaded (loaded already)".

"Unload" means an operation to deactivate a process of a module. When "unload" is completed, the status of the module transits to "installed".

"Reload" means an operation to reload a module. If the status of a module is "loaded", the above-mentioned "unload" and "load" are performed in this order. If status of a module is "installed", "load" is performed. When "reload" is completed, the status of the module transits to "loaded".

Fig. 7 is a diagram showing an example of a type of the dependency relationship 123 in the first exemplary embodiment of the present invention.

According to the first exemplary embodiment of the present invention, it is assumed that "precedent status dependent", "reverse precedent status dependent", "notification dependent" and "reverse notification dependent" are used as the type of the dependency relationship 123.

In Fig. 7, an arrow between two operations indicates the dependency relationship 123. Moreover, a start point of the arrow, an end point of the arrow, and the inside of an angle bracket < > attached to the arrow mean a dependency source, a dependency destination, and the type of the dependency relationship 123, respectively.

Here, the "precedent status dependent" shows that, in order to perform an operation of the dependency source, it is necessary that a module, which is corresponding to an operation of the dependency destination, is in status that the operation of the dependency destination has been completed. For example, in the case that the precedent status dependent having "Module A : install" as the dependency source and "Module B : install" as the dependency destination is set as shown in Fig. 7, it is necessary that the status of the module B is "installed", in order to perform "install" of the module A.

The "reverse precedent status dependent", which is the dependency relationship 123 reverse to the precedent status dependent, shows that, in order to perform an operation of the dependency destination, it is necessary that a module, which is corresponding to an operation of the dependency source, is in status that the operation of the dependency source has been completed. For example, in the case that the "reverse precedent status dependent" having "Module A : install" as the dependency source and "Module B : install" as the dependency destination is set, it is necessary that the status of the module A is "installed", in order to perform "install" of the module B.

The "notification dependent" shows that an operation of the dependency destination is performed after an operation of the dependency source is performed. For example, in the case that the "notification dependent" having "Module A : install" as the dependency source and "Module B : reload" as the dependency destination is set, "reload" of the module B is performed after "install" of the module A is performed.

The "reverse notification dependent", which is the dependency relationship 123 reverse to the notification dependent, shows that an operation of the dependency source is performed after an operation of the dependency destination is performed. For example, in the case that the "reverse notification dependent" having "Module A : reload" as the dependency source and "Module B : install" as the dependency destination is set, "reload" of the module A is performed after "install" of the module B is performed.

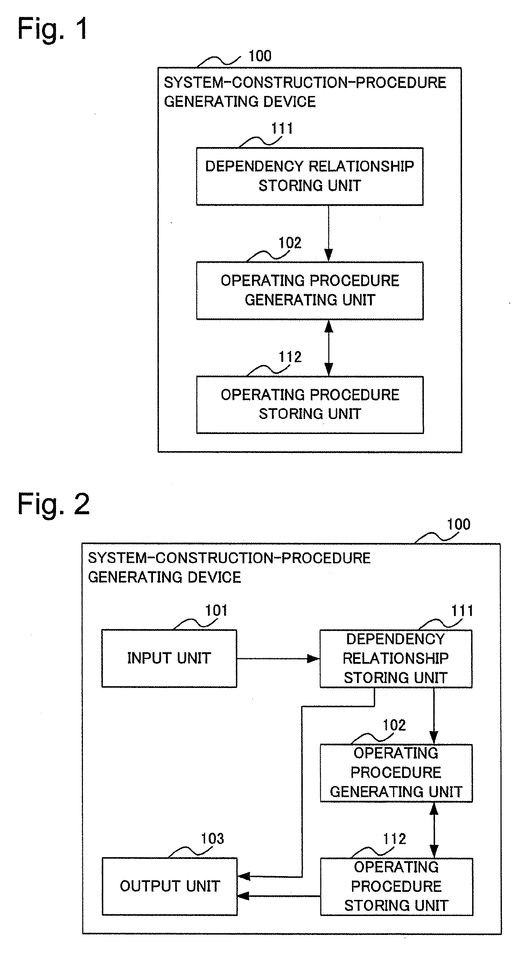

Next, a configuration according to the first exemplary embodiment of the present invention will be described. Fig. 2 is a block diagram showing a configuration of a system-construction-procedure generating device 100 in the first exemplary embodiment of the present invention.

Referring to Fig. 2, the system-construction-procedure generating device 100 according to the first exemplary embodiment of the present invention includes an input unit 101, an operating procedure generating unit 102, an output unit 103, a dependency relationship storing unit 111 and an operating procedure storing unit 112.

Here, the dependency relationship storing unit 111 stores dependency relationship information 121. The operating procedure storing unit 112 stores a procedure sequence 122.

The dependency relationship information 121 indicates the dependency relationship 123 of each of one or more pairs of operations out of a plurality of operations which are necessary for system construction.

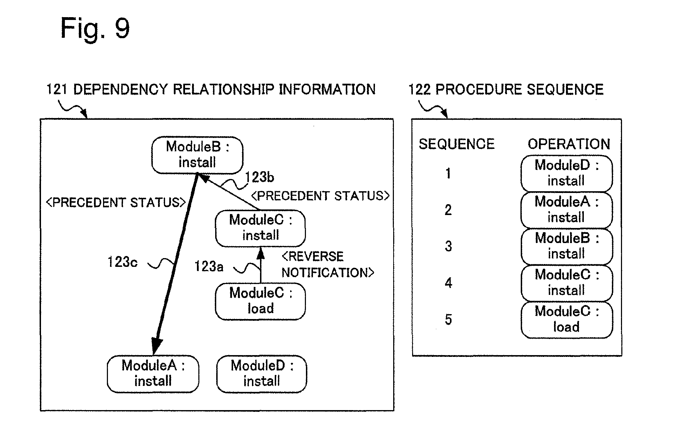

Each of Figs. 8 and 9 is a diagram showing examples of the dependency relationship information 121 and the procedure sequence 122 in the first exemplary embodiment of the present invention. The procedure sequence 122 of Fig. 8 is set for the dependency relationship information 121 shown in Fig. 8. The procedure sequence 122 of Fig. 9 is set for the dependency relationship information 121 shown in Fig. 9.

Here, similarly to Fig. 7, an arrow between two operations of the dependency relationship information 121 indicates the dependency relationship 123. A start point of the arrow, an end point of the arrow, and the inside of an angle bracket < > attached to the arrow mean the dependency source, the dependency destination, and the type of the dependency relationship 123, respectively. According to the dependency relationship information 121 shown in Fig. 8, the dependency relationships 123 (123a and 123b) are set for two pairs of operations out of five operations which are necessary for the system construction.

The procedure sequence 122 indicates a sequence for performing each of the plural operations which are necessary for the system construction. The procedure sequence 122 shown in Fig. 8 indicates that operations of "install" of a module B, "install" of a module C, and "load" of the module C are performed in this order.

Note that it is assumed that a plurality of operations, which are necessary for the system construction, are inputted in advance by an user, and are set in the dependency relationship information 121 and the procedure sequence 122. Moreover, it is assumed that, in initial status, the dependency relationship 123 is not set in the dependency relationship information 121, and each operation in the procedure sequence 122 is arranged in an order of the user's inputting.

The input unit 101 receives an input for adding or deleting of the dependency relationship 123 from the user, and updates the dependency relationship information 121. The dependency relationship 123 is inputted, for example, by the user's handling of an input device such as a mouse, a touch screen or the like, which is not shown in the figure, on a dependency definition screen 201 mentioned later.

In the case that the dependency relationship information 121 is updated, the operating procedure generating unit 102 updates the procedure sequence 122 in such a way that each of one or more dependency relationships 123 indicated by the dependency relationship information 121 is satisfied.

The output unit 103 outputs the updated dependency relationship information 121 and the updated procedure sequence 122. Here, the output unit 103 generates and displays an output screen 200, for example, through a display device which is not shown in the figure.

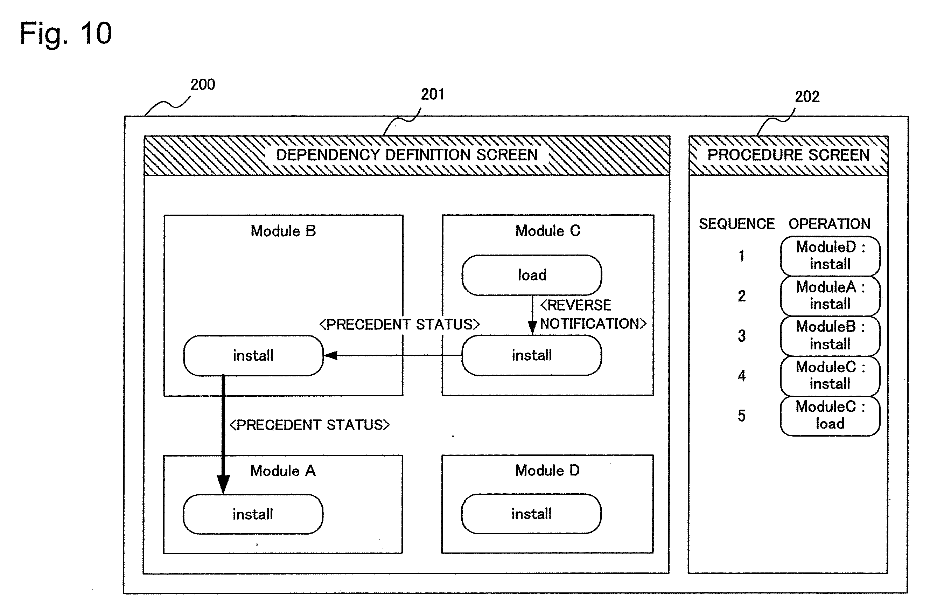

Fig. 10 is a diagram showing an example of the output screen 200 in the first exemplary embodiment of the present invention. The output screen 200 includes the dependency definition screen 201 (dependency relationship screen) and a procedure screen 202.

Here, the dependency definition screen 201 displays the dependency relationship information 121. The dependency definition screen 201 shown in Fig. 10 displays the dependency relationship information 121 shown in Fig. 9. A plurality of modules included in the system are arranged on the dependency definition screen 201. The operations to be performed with respect to the module at the time of the system construction are arranged in each module on the dependency definition screen 201. The dependency relationship 123 is indicated by an arrow from the operation of the dependency source to the operation of the dependency destination.

The procedure screen 202 displays the procedure sequence 122. The procedure screen 202 shown in Fig. 10 displays the procedure sequence 122 shown in Fig. 9.

The user adds a dependency relationship 123 by connecting the operation of the dependency source and the operation of the dependency destination, and designating the type of the dependency relationship 123 on the dependency definition screen 201 through the input unit 101. The user deletes the dependency relationship 123 by deleting the connection between the operation of the dependency source and the operation of the dependency destination, which has been set, on the dependency definition screen 201 through the input unit 101.

Note that the system-construction-procedure generating device 100 may be a computer which includes a CPU (Central Processing Unit) and a storage medium storing a program, and which operates by control based on the program. Moreover, the dependency relationship storing unit 111 and the operating procedure storing unit 112 may be configured by a separate storage medium or one storage medium.

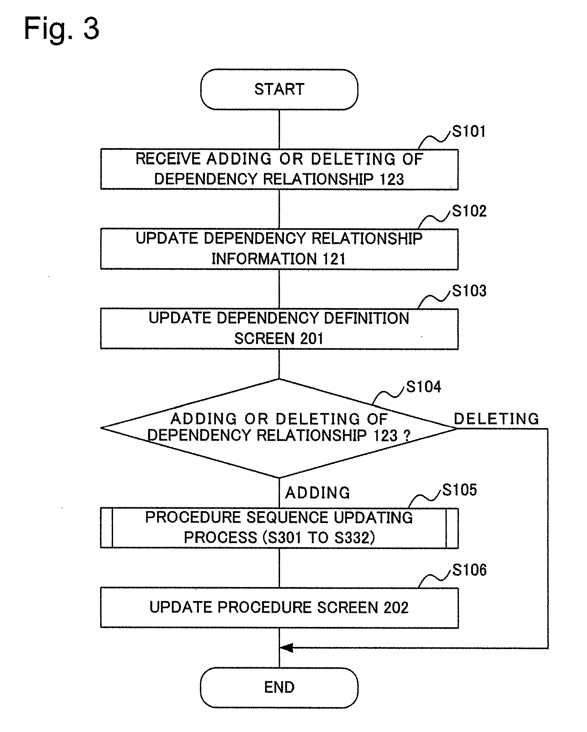

Next, an operation of the system-construction-procedure generating device 100 in the first embodiment of the present invention will be described. Fig. 3 is a flowchart showing a process which is carried out by the system-construction-procedure generating device 100 in the first exemplary embodiment of the present invention.

Here, it is assumed that the dependency relationship information 121 and the procedure sequence 122 are set as shown in Fig. 8.

Firstly, from the user, the input unit 101 receives an input for adding or deleting of a dependency relationship 123 (Step S101).

For example, the input unit 101 receives adding of a dependency relationship 123c having "Module B : install" as an operation of the dependency source, "Module A : install" as an operation of the dependency destination, and the "precedent status dependent" as a type of the dependency relationship.

The input unit 101 updates the dependency relationship information 121 according to the input (Step S102).

For example, the input unit 101 updates the dependency relationship information 121 (adds the dependency relationship 123c) as shown in Fig. 9.

The output unit 103 updates the dependency definition screen 201 according to the update of the dependency relationship information 121 (Step S103).

For example, the output unit 103 updates the dependency definition screen 201 (adds an arrow which indicates the precedent status dependent from " Module B : install" to "Module A : install" ) as shown in Fig. 10.

Next, the operating procedure generating unit 102 judges whether the input indicates adding or deleting of the dependency relationship 123 (Step S104). In the case of adding of the dependency relationship 123 in Step S104, the operating procedure generating unit 102 updates the procedure sequence 122 (Step S105) according to a procedure sequence updating process (Steps S301 to S332) described later, in such a way that the dependency relationship 123 indicated by the dependency relationship information 121 is satisfied.

For example, the operating procedure generating unit 102 updates the procedure sequence 122 as shown in Fig. 9.

Finally, the output unit 103 updates the procedure screen 202 according to the update of the procedure sequence 122 (Step S106).

For example, the output unit 103 updates the procedure screen 202 as shown in Fig. 10 (displays the procedure sequence 122 shown in Fig. 9).

Note that, in the case that the input indicates deleting of the dependency relationship 123 in Step S104, the operating procedure generating unit 102 holds the present procedure sequence 122.

The user or the like can construct the system by performing each operation according to the outputted procedure sequence 122.

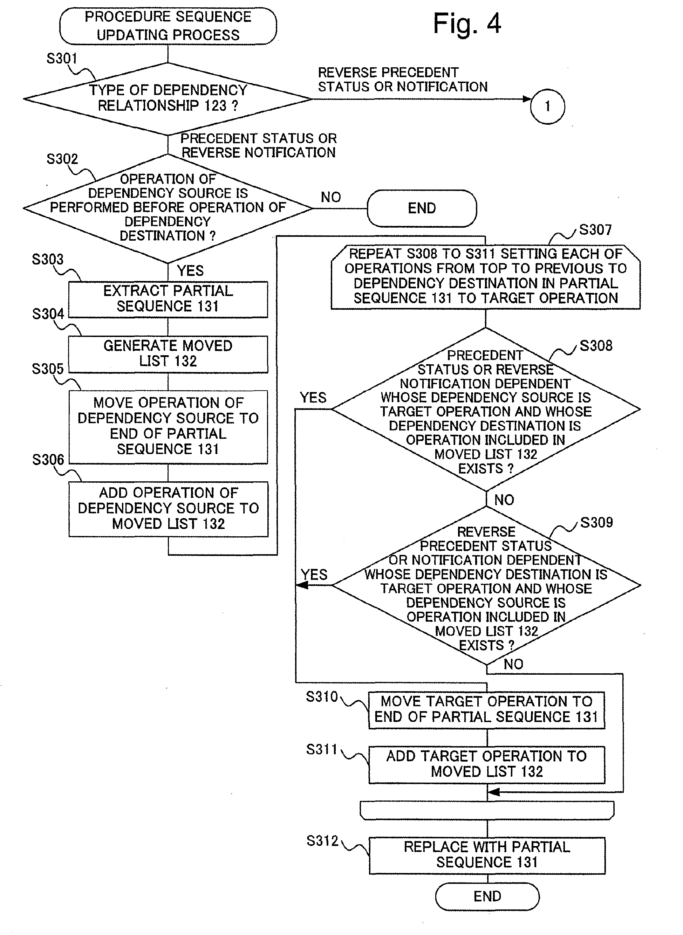

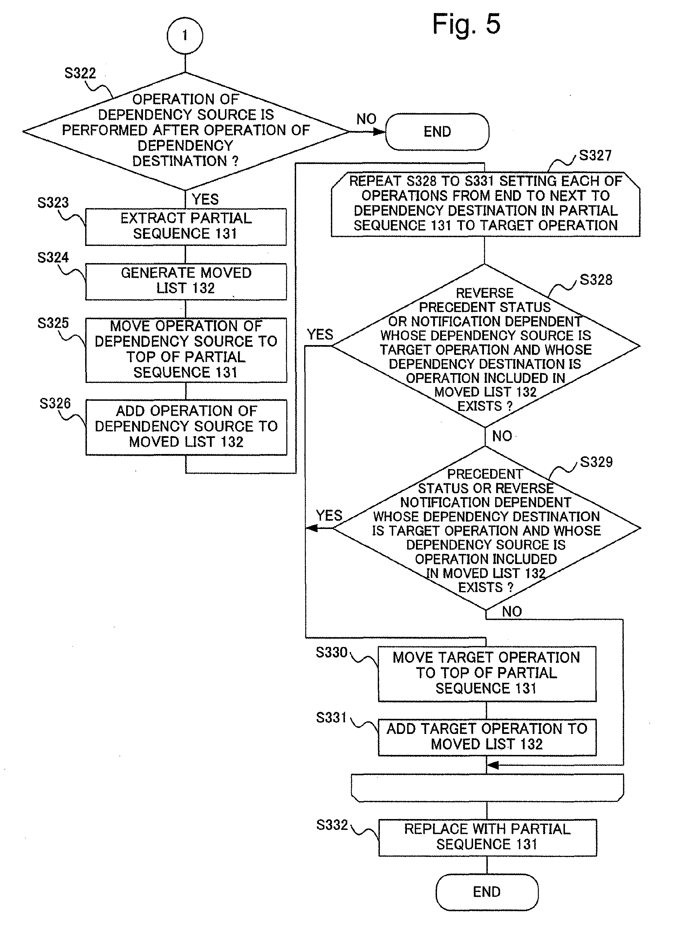

Each of Figs. 4 and 5 is a flowchart showing details of the procedure sequence updating process (Step S105) in the first exemplary embodiment of the present invention.

Firstly, the operating procedure generating unit 102 judges whether the type of the added dependency relationship 123 is corresponding to "the precedent status dependent or the reverse notification dependent" or "the reverse precedent status dependent or the notification dependent" (Step S301).

In the case that the type of the dependency relationship 123 is the precedent status dependent or the reverse notification dependent in Step S301, the operating procedure generating unit 102 judges whether, in the present procedure sequence 122, the operation of the dependency source of the added dependency relationship 123 is performed before the operation of the dependency destination (Step S302).

In the case that the operation of the dependency source of the added dependency relationship 123 is performed before the operation of the dependency destination (Yes in Step S302), the operating procedure generating unit 102 extracts a sequence of operations from the dependency source to the dependency destination in the present procedure sequence 122, as a partial sequence 131 (Step S303).

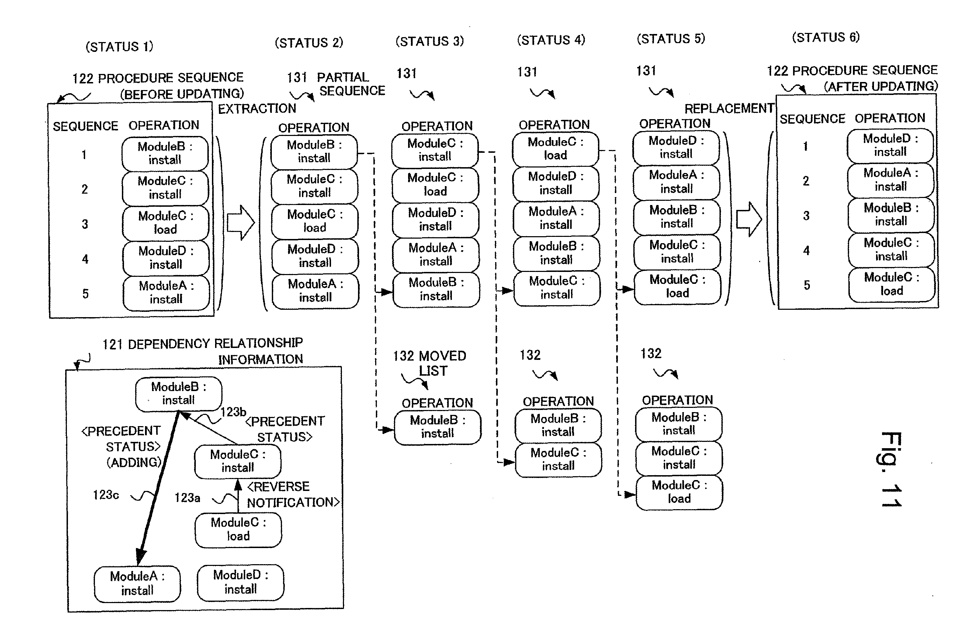

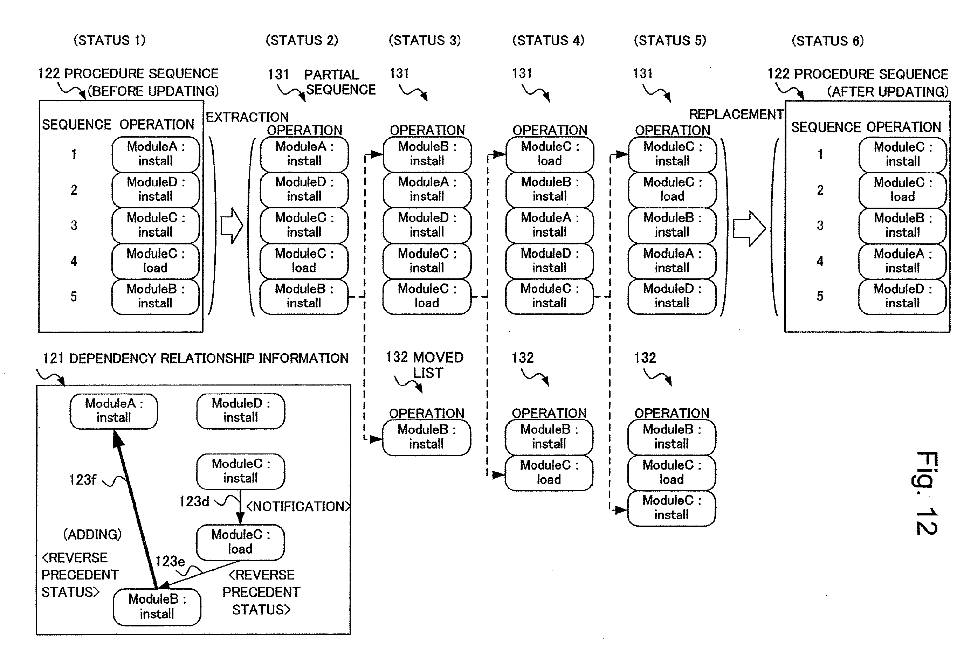

Each of Figs. 11 and 12 is a diagram showing an example of updating the procedure sequence 122 in the first exemplary embodiment of the present invention. It is assumed, for example, that the dependency relationship 123c is added when the dependency relationship information 121 and the procedure sequence 122 are set as shown in status 1 in Fig. 11 (the dependency relationship information 121 and the procedure sequence 122 are set as shown in Fig. 8). In this case, the operation of the dependency source (Module B : install) of the added dependency relationship 123 (the precedent status dependent) is performed before the operation of the dependency destination (Module A : install). Accordingly, the operating procedure generating unit 102 extracts a sequence of operations from the dependency source (Module B : install) to the dependency destination (Module A : install), as the partial sequence 131 as shown in status 2 in Fig. 11.

The operating procedure generating unit 102 generates an empty list, which is used for storing a moved operation, as a moved list 132 (Step S304).

The operating procedure generating unit 102 moves the top operation (the operation of the dependency source) to the end of the partial sequence 131 (Step S305), and adds the moved operation to the moved list 132 (Step S306).

For example, the operating procedure generating unit 102 moves the operation of the dependency source (Module B : install) to the end of the partial sequence 131, and adds the moved operation to the moved list 132, as shown in status 3 in Fig. 11.

Next, the operating procedure generating unit 102 repeats Steps S308 to S311, setting each of operations from the top to the previous to the dependency destination in the partial sequence 131, in turn, to the target operation (Step S307).

The operating procedure generating unit 102 judges whether there is a dependency relationship 123, whose dependency source is the target operation and whose dependency destination is the operation in the moved list 132, out of the dependency relationships indicating the precedent status dependent or the reverse notification dependent which are included in the dependency relationship information 121 (Step S308).

In the case that there is no dependency relationship 123 in Step S308 (No in step S308), the operating procedure generating unit 102 judges whether there is a dependency relationship 123, whose dependency destination is the target operation and whose dependency source is the operation in the moved list 132, out of the dependency relationships 123 indicating the reverse precedent status dependent or the notification dependent which are included in the dependency relationship information 121 (Step S309).

In the case that there is the dependency relationship 123 in Steps S308 or S309 (Yes in Step S308 or Yes in Step S309), the operating procedure generating unit 102 moves the target operation to the end of the partial sequence 131 (Step S310), and adds the moved operation to the moved list 132 (Step S311).

For example, in the status 3 shown in Fig. 11, in the case that the target operation is the operation "Module C : install" in the partial sequence 131, the dependency relationship information 121 includes the precedent status dependent (dependency relationship 123b) whose dependency source is the target operation and whose dependency destination is the operation "Module B : install" included in the moved list 132. Accordingly, the operating procedure generating unit 102 moves the target operation (Module C : install) to the end of the partial sequence 131 as shown in status 4 in Fig. 11, and adds the moved operation to the moved list 132.

In the status 4 shown in Fig. 11, in the case that the target operation is the operation "Module C : load" in the partial sequence 131, the dependency relationship information 121 includes the reverse notification dependent (dependency relationship 123a) whose dependency source is the target operation and whose dependency destination is the operation "Module C : install" included in the moved list 132. Accordingly, the operating procedure generating unit 102 moves the target operation (Module C : load) to the end of the partial sequence 131 as shown in status 5 in Fig. 11, and adds the moved operation to the moved list 132.

In the status 5 shown in Fig. 11, in the case that the target operation is the operation "Module D : install" in the partial sequence 131, the dependency relationship information 121 does not include a dependency relationship 123 whose dependency source or dependency destination is the target operation. Accordingly, the operating procedure generating unit 102 holds the partial sequence 131 of the status 5 shown in Fig. 11.

Next, the operating procedure generating unit 102 replaces the sequence of operations from the dependency source to the dependency destination of the added dependency relationship 123, in the present procedure sequence 122, with the updated partial sequence 131 (Step S312).

For example, the operating procedure generating unit 102 obtains the procedure sequence 122 as shown in status 6 on the basis of the partial sequence 131 of the status 5 shown in Fig. 11 (obtains the procedure sequence 122 shown in Fig. 9).

On the other hand, in the case that the type of the dependency relationship 123 is the reverse precedent status dependent or the notification dependent in Step S301, the operating procedure generating unit 102 judges whether, in the present procedure sequence 122, the operation of the dependency source of the added dependency relationship 123 is performed after the operation of the dependency destination (Step S322).

In the case that the operation of the dependency source of the added dependency relationship 123 is performed after the operation of the dependency destination (Yes in Step S322), the operating procedure generating unit 102 extracts a sequence of operations from the dependency destination to the dependency source in the present procedure sequence 122, as the partial sequence 131 (Step S323).

It is assumed, for example, that a dependency relationship 123f is added when the dependency relationship information 121 and the procedure sequence 122 are set as shown in status 1 in Fig. 12. In this case, the operation of dependency source (Module B : install) of the added dependency relationship 123 (the reverse precedent status dependent) is performed after the operation of the dependency destination (Module A : install). Accordingly, the operating procedure generating unit 102 extracts a sequence of operations from the dependency destination (Module A : install) to the dependency source (Module B : install), as the partial sequence 131 as shown in status 2 in Fig. 12.

The operating procedure generating unit 102 generates an empty list, which is used for storing a moved operation, as the moved list 132 (Step S324).

The operating procedure generating unit 102 moves the end operation (the operation of the dependency source) to the top of the partial sequence 131 (Step S325), and adds the moved operation to the moved list 132 (Step S326).

For example, the operating procedure generating unit 102 moves the operation of dependency source (Module B : install) to the top of the partial sequence 131, and adds the moved operation to the moved list 132, as shown in status 3 in Fig. 12.

Next, the operating procedure generating unit 102 repeats Steps S328 to S331, setting each of operations from the end to the next to the dependency destination in the partial sequence 131, in reverse turn, to the target operation (Step S327).

The operating procedure generating unit 102 judges whether there is a dependency relationship 123, whose dependency source is the target operation and whose dependency destination is the operation in the moved list 132, out of the dependency relationships 123 indicating the reverse precedent status dependent or the notification dependent which are included in the dependency relationship information 121 (Step S328).

In the case that there is no dependency relationship 123 in Step S328 (No in step S328), the operating procedure generating unit 102 judges whether there is a dependency relationship 123, whose dependency destination is the target operation and whose dependency source is the operation in the moved list 132, out of the dependency relationships 123 indicating the precedent status dependent or the reverse notification dependent which are included in the dependency relationship information 121 (Step S329).

In the case that there is the dependency relationship 123 in Steps S308 or S309 (Yes in Step S308 or Yes in Step S309), the operating procedure generating unit 102 moves the target operation to the top of the partial sequence 131 (Step S330), and adds the moved operation to the moved list 132 (Step S331).

For example, in the status 3 shown in Fig. 12, in the case that the target operation is the operation "Module C : load" in the partial sequence 131, the dependency relationship information 121 includes the reverse precedent status dependent (dependency relationship 123e) whose dependency source is the target operation and whose dependency destination is the operation "Module B : install" included in the moved list 132. Accordingly, the operating procedure generating unit 102 moves the target operation (Module C : load) to the top of the partial sequence 131 as shown in status 4 in Fig. 12, and adds the moved operation to the moved list 132.

In the status 4 shown in Fig. 12, in the case that the target operation is the operation "Module C : install" in the partial sequence 131, the dependency relationship information 121 includes the notification dependent (dependency relationship 123d) whose dependency source is the target operation and whose dependency destination is the operation "Module C : load" included in the moved list 132. Accordingly, the operating procedure generating unit 102 moves the target operation (Module C : install) to the top of the partial sequence 131 as shown in status 5 in Fig. 12, and adds the moved operation to the moved list 132.

In the status 5 shown in Fig. 12, in the case that the target operation is the operation "Module D : install" in the partial sequence 131, the dependency relationship information 121 does not include a dependency relationship 123 whose dependency source or dependency destination is the target operation. Accordingly, the operating procedure generating unit 102 holds the partial sequence 131 of the status 5 shown in Fig. 12.

Next, the operating procedure generating unit 102 replaces the sequence of operations from the dependency destination to the dependency source of the added dependency relationship 123, in the present procedure sequence 122, with the updated partial sequence 131 (Step S332).

For example, the operating procedure generating unit 102 obtains the procedure sequence 122 as shown in status 6 in Fig. 12 on the basis of the partial sequence 131 of the status 5 shown in Fig. 12.

As described above, the operation according to the first exemplary embodiment of the present invention is completed.

Note that, while the output unit 103 outputs the updated procedure sequence 122 through the output screen 200 in the first exemplary embodiment of the present invention, the operating procedure generating unit 102 or the output unit 103 may output the updated procedure sequence 122 as a file or the like.

Moreover, the operating procedure generating unit 102 or the output unit 103 may output the procedure sequence 122 which includes information on dependency relationships 123 between operations (a dependency source, a dependency destination, a type of the dependency relationship 123 or the like).

Next, a characteristic configuration of the first exemplary embodiment of the present invention will be described. Fig. 1 is a block diagram showing a characteristic configuration according to the first exemplary embodiment of the present invention.

Referring to Fig. 1, a system-construction-procedure generating device 100 includes a dependency relationship storing unit 111, an operating procedure storing unit 112, and an operating procedure generating unit 102.

The dependency relationship storing unit 111 stores dependency relationship information 121 indicating a dependency relationship 123 for each of one or more pairs of operations among a plurality of operations each expressed with a combination of one of a plurality of program modules and one of a plurality of operation types, the plurality of operations being required for system construction. The operating procedure storing unit 112 stores a procedure sequence 122 indicating a sequence for performing each of the plurality of operations. The operating procedure generating unit 102 updates the procedure sequence 122 in such a way that each of the one or more dependency relationships 123 indicated by the dependency relationship information 121 is satisfied, and outputs the updated procedure sequence 122, when the dependency relationship information 121 is updated

According to the first exemplary embodiment of the present invention, it is possible to generate a construction procedure of a system which is constructed by performing operations of plural types with respect to each of plural program modules. The reason is that the dependency relationship storing unit 111 stores the dependency relationship information 121 indicating the dependency relationship 123 for each of one or more pairs of operations among a plurality of operations each of which is expressed with a combination of one of a plurality of program modules and one of a plurality of operation types, and which are necessary for the system construction, and the operating procedure generating unit 102 updates the procedure sequence 122, which indicates the sequence for performing each of the plural operations, in such a way that each of the one or more dependency relationships 123 indicated by the dependency relationship information 121 is satisfied, in the case that the dependency relationship information 121 is updated. Consequently, the procedure sequence 122 is generated automatically, and it is possible to reduce a design cost of the procedure sequence 122 and number of design mistakes.

Moreover, according to the first exemplary embodiment of the present invention, it is possible to generate a system-construction-procedure using dependency relationships of plural types (bidirectional types) whose sequences for performing an operation of a dependency source and an operation of a dependency destination are different each other. The reason is that the operating procedure generating unit 102 updates the procedure sequence 122 by determining which of the operation of the dependency source and the operation of the dependency destination should be performed firstly, according to the type of the dependency relationship 123.

Moreover, according to the first exemplary embodiment of the present invention, it is possible to easily grasp influence on the system-construction-procedure due to addition and deletion of the dependency relationship. The reason is that the input unit 101 receives the input for adding or deleting of the dependency relationship 123 on the dependency definition screen 201 and updates the dependency relationship information 121, and the output unit 103 generates and outputs the dependency definition screen 201 and the procedure screen 202 in the case that the dependency relationship information 121 and the procedure sequence 122 are updated.

### (Second exemplary embodiment)

Next, a second exemplary embodiment of the present invention will be described.

The second exemplary embodiment of the present invention is different from the first exemplary embodiment of the present invention in a point that a plurality of the procedure sequences 122, which can be performed in parallel, are generated.

A configuration according to the second exemplary embodiment of the present invention is similar to the configuration according to the first exemplary embodiment of the present invention (Fig. 2).

According to the second exemplary embodiment of the present invention, the operating procedure storing unit 112 stores the procedure sequence 122 for each of one or more operation sets. Here, the operation set means a set whose element is corresponding to each operation, which can be obtained by following a chain of the dependency relationships 123, out of a plurality of operations which are necessary for the system construction. Since there is no dependency relationship 123 between the different operation sets, operations which are included in the different operation sets can be performed in parallel.

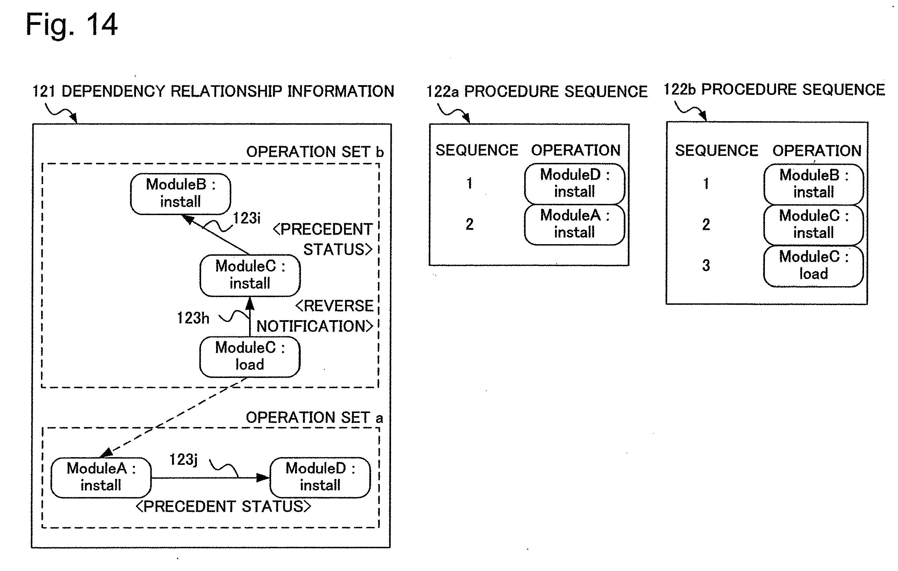

Each of Figs. 14, 15, 17 and 18 is a diagram showing examples of the dependency relationship information 121 and the procedure sequence 122 in the second exemplary embodiment of the present invention.

According to the dependency relationship information 121 shown in Fig. 14, the dependency relationships 123 (123i, 123j and 123h) are set for three pairs of operations out of five operations which are necessary for the system construction. Moreover, two operation sets, an operation set "a" whose elements are "Module A : install" and "Module D : install", and an operation set "b" whose elements are "Module B : install", "Module C : install" and "Module C : load", are generated, and the procedure sequences 122 (122a and 122b) are set for the respective operation sets.

In the case that the dependency relationship 123 is added, the operating procedure generating unit 102 carries out integration of the procedure sequences 122. Moreover, in the case that the dependency relationship 123 is deleted, the operating procedure generating unit 102 divides the procedure sequence 122.

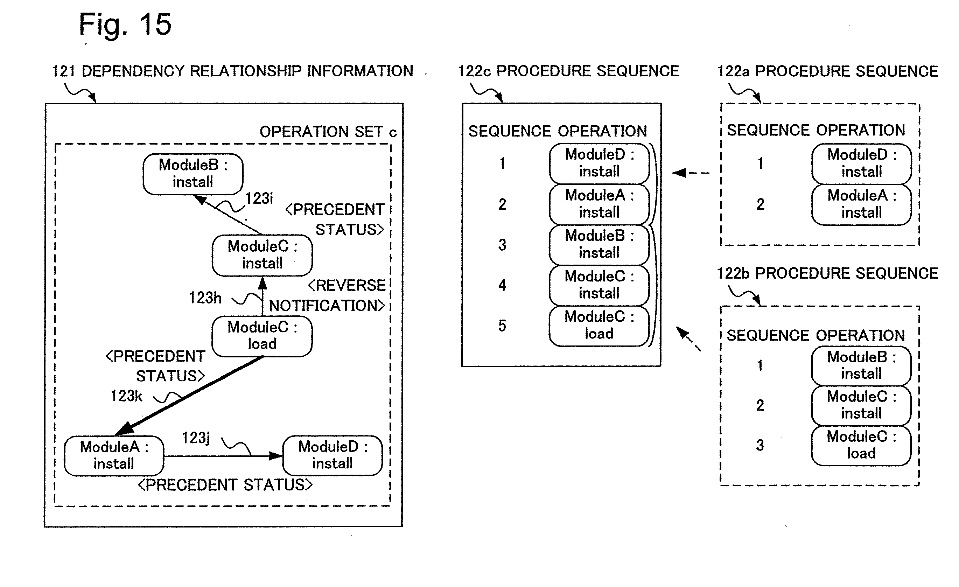

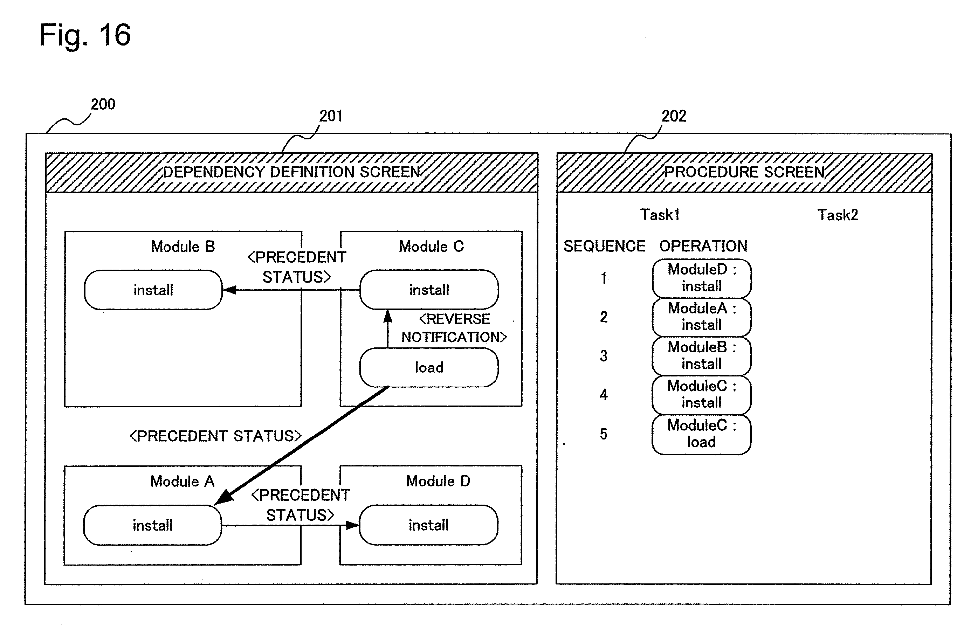

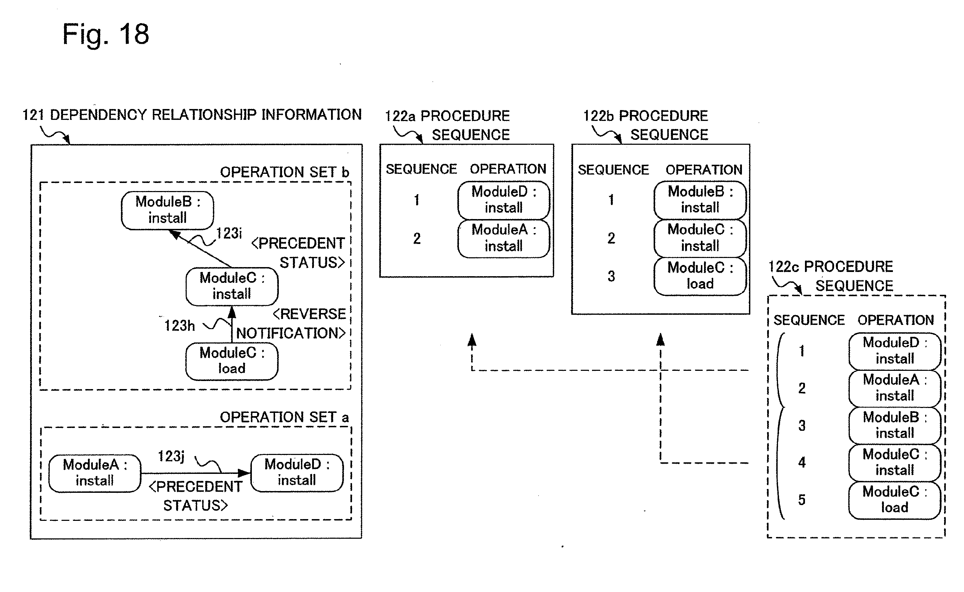

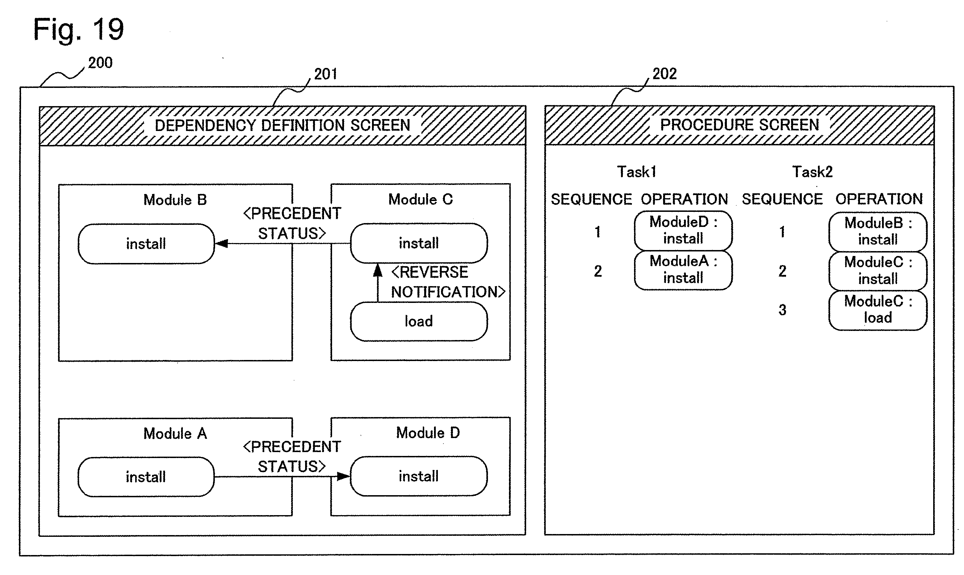

Each of Figs. 16 and 19 is a diagram showing an example of the output screen 200 in the second exemplary embodiment of the present invention. In the second exemplary embodiment of the present invention, one or more procedure sequences 122 are displayed on the procedure screen 202 as operation sequences which can be performed in parallel. The dependency definition screen 201 and the procedure screen 202 shown in Fig. 16 display the dependency relationship information 121 and the procedure sequence 122c shown in Fig. 15, respectively. The dependency definition screen 201 and the procedure screen 202 shown in Fig. 19 display the dependency relationship information 121 and the procedure sequences 122a, 122b shown in Fig. 18, respectively.

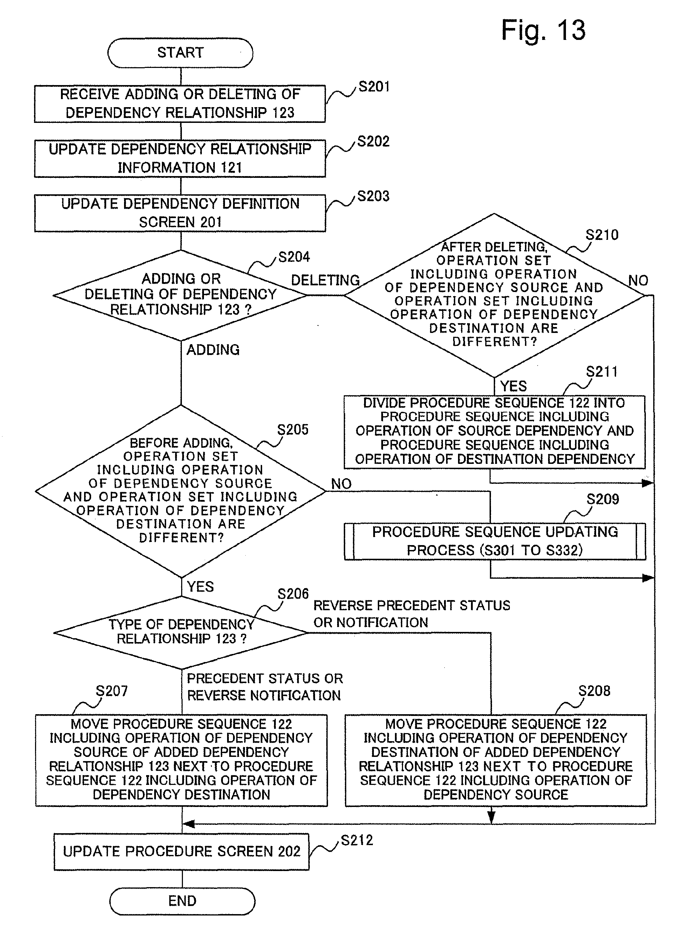

Next, an operation of the system-construction-procedure generating device 100 in the second exemplary embodiment of the present invention will be described. Fig. 13 is a flowchart showing a process which is performed by the system-construction-procedure generating device 100 in the second exemplary embodiment of the present invention.

Here, it is assumed that the dependency relationship information 121 and the procedure sequence 122 are set as shown in Fig. 14.

Firstly, the input unit 101 receives the input for adding or deleting of the dependency relationship 123 from the user (Step S201).

For example, the input unit 101 receives an addition of a dependency relationship 123k having "Module C : load" as an operation of the dependency source, "Module A : install" as an operation of the dependency destination, and the "precedent status dependent" as a type of the dependency relationship.

The input unit 101 updates the dependency relationship information 121 according to the input (Step S202).

For example, the input unit 101 updates the dependency relationship information 121 (adds the dependency relationship 123k) as shown in Fig. 15.

The output unit 103 updates the dependency definition screen 201 according to the updated of the dependency relationship information 121 (Step S203).

For example, the output unit 103 updates the dependency definition screen 201 (adds an arrow which indicates the precedent status dependent from "Module C : load" to "Module A : install") as shown in Fig. 16.

Next, the operating procedure generating unit 102 judges whether the input indicates adding or deleting of the dependency relationship 123 (Step S204).

In the case of adding of the dependency relationship 123 in Step S204, the operating procedure generating unit 102 judges whether an operation set including the operation of the dependency source of the added dependency relationship 123 and an operation set including the operation of the dependency destination of the added dependency relationship 123 are different (whether the added dependency relationship 123 indicates a relationship between operation sets) in the dependency relationship information 121 before adding the dependency relationship 123 (Step S205). In the case that the operation sets are different each other (Yes in Step S205), the operating procedure generating unit 102 judges whether the type of the added dependency relationship 123 is "the precedent status dependent or the reverse notification dependent" or "the reverse precedent status dependent or the notification dependent" (Step S206).

In the case that the type is the precedent status dependent or the reverse notification dependent in Step S206, the operating procedure generating unit 102 integrates the procedure sequences 122 by moving the procedure sequence 122, which includes the operation of the dependency source of the added dependency relationship 123, next to the procedure sequence 122 which includes the operation of the dependency destination (Step S207).

For example, in the dependency relationship information 121 shown in Fig. 14, the operation of the dependency source and the operation of the dependency destination of the added dependency relationship 123k are included in different operation sets "a" and "b", respectively. Moreover, the type of the added dependency relationship 123k is the precedent status dependent. Accordingly, the operating procedure generating unit 102 generates the procedure sequence 122c by moving the procedure sequence 122b next to the procedure sequence 122a, as shown in Fig. 15.

In the case that the type is the reverse precedent status dependent or the notification dependent in Step S206, the operating procedure generating unit 102 integrates the procedure sequences 122 by moving the procedure sequence 122, which includes the operation of the dependency destination of the added dependency relationship 123, next to the procedure sequence 122 which includes the operation of the dependency source (Step S208).

Moreover, in the case that an operation set including the operation of dependency source of the added dependency relationship 123 and an operation set including the operation of dependency destination of the added dependency relationship 123 are the same (No in Step S205), the operating procedure generating unit 102 updates the procedure sequence 122, which includes the operation of the dependency source and the operation of the dependency destination, according to the above-mentioned procedure step updating process (Steps S301 to S322) (Step S209)

Finally, the output unit 103 updates the procedure screen 202 according to the update of the procedure sequence 122 (Step S212).

For example, the output unit 103 updates the procedure screen 202 as shown in Fig. 16 (displays the procedure sequence 122c shown in Fig. 15).

On the other hand, in the case of deleting of the dependency relationship 123 in Step S204, the operating procedure generating unit 102 judges whether an operation set including the operation of the dependency source of the deleted dependency relationship 123 and an operation set including the operation of the dependency destination of the deleted dependency relationship 123 are different (whether an operation set is divided due to deleting of the dependency relationship 123) in the dependency relationship information 121 after deleting the dependency relation 123 (Step S210).

In the case that the operation sets are different each other in Step S210 (Yes in Step S210), the operating procedure generating unit 102 divides a procedure sequence 122 which includes the operation of the dependency source and the operation of the dependency destination into a procedure sequence 122 including the operation of the dependency destination and a procedure sequence 122 including the operation of the dependency source by extracting procedure sequences 122 corresponding to the respective divided operation sets from the procedure sequence 122 (Step S211).

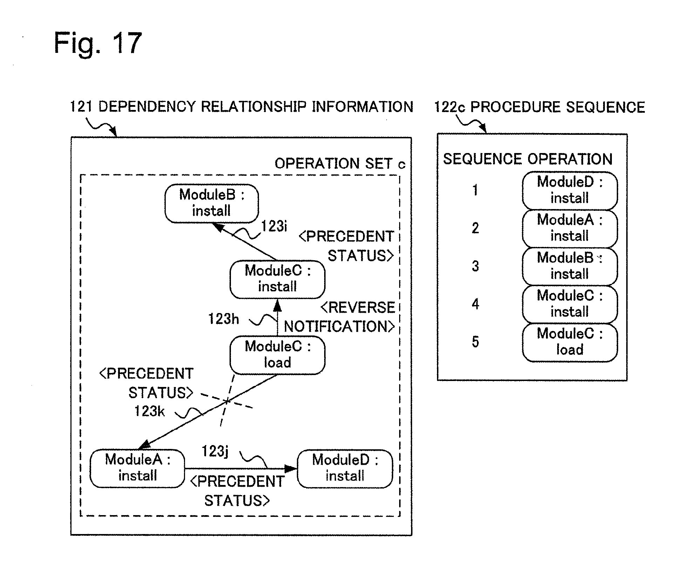

For example, it is assumed that the input unit 101 receives a deletion of the dependency relationship 123k when the dependency relationship information 121 and the procedure sequence 122c are set as shown in Fig. 17. In this case, the input unit 101 updates the dependency relationship information 121 (deletes the dependency relationship 123k) as shown in Fig. 18. In the dependency relationship information 121 shown in Fig. 18, the operation of the dependency source and the operation of the dependency destination of the added dependency relationship 123k are included in the different operation sets "a" and "b", respectively. Accordingly, the operating procedure generating unit 102 divides the procedure sequence 122c into the procedure sequence 122a which includes the operation of the dependency destination, and the procedure sequence 122b which includes the operation of the dependency source. Then, the output unit 103 updates the procedure screen 202 as shown in Fig. 19 (displays the procedure sequences 122a and 122b shown in Fig. 18).

Note that the operating procedure generating unit 102 may integrate one of the procedure sequences 122, which are obtained as a result of dividing, with another procedure sequence 122 having small number of operations.

As described above, the operation according to the second exemplary embodiment of the present invention is completed.

According to the second exemplary embodiment of the present invention, even in the case that a plurality of system-construction-processes can be performed in parallel, it is possible to generate a system-construction-procedure. The reason is that the operating procedure generating unit 102 integrates and divides the procedure sequence 122 according to integration and division of the operation set which are due to addition and deletion of the dependency relationship 123.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2012-045761, filed on March 1, 2012, the disclosure of which is incorporated herein in its entirety by reference.

### [Industrial Availability]

The present invention can be used as an operation tool, which generates a system-construction-procedure automatically, for construction and maintenance of a computer system and a service system such as a data center or the like.

### Reference Signs List

- 100: system-construction-procedure generating device
- 101: input unit
- 102: operating procedure generating unit
- 103: output unit
- 111: dependency relationship storing unit
- 112: operating procedure storing unit
- 121: dependency relationship information
- 122: procedure sequence
- 123: dependency relationship
- 131: partial sequence
- 132: moved list
- 200: output screen
- 201: dependency definition screen
- 202: procedure screen

## Claims

1. A system-construction-procedure generating device comprising:
a dependency relationship storing means for storing dependency relationship information indicating a dependency relationship for each of one or more pairs of operations among a plurality of operations each expressed with a combination of one of a plurality of program modules and one of a plurality of operation types, the plurality of operations being required for system construction;
an operating procedure storing means for storing a procedure sequence indicating a sequence for performing each of the plurality of operations; and
an operating procedure generating means for updating the procedure sequence in such a way that each of the one or more dependency relationships indicated by the dependency relationship information is satisfied, and outputting the updated procedure sequence, when the dependency relationship information is updated.

2. The system-construction-procedure generating device according to claim 1, wherein
the plurality of operation types include at least one out of installation, uninstallation, loading, unloading, and reloading of a program module.

3. The system-construction-procedure generating device according to claim 2, wherein
one operation and other operation included in a pair of operations are defined as an operation of a dependency source and an operation of a dependency destination, respectively, and
the dependency relationship is designated by at least one out of:
a precedent status dependent which indicates that the operation of the dependency source is performed when a program module related to the operation of the dependency destination is in status showing that the operation of the dependency destination has been completed;
a reverse precedent status dependent which indicates that the operation of the dependency source is performed when a program module related to the operation of the dependency source is in status showing that the operation of the dependency source has been completed;
a notification dependent which indicates that the operation of the dependency destination is performed after the operation of the dependency source is performed; and
a reverse notification dependent which indicates that the operation of the dependency source is performed after the operation of the dependency destination is performed.

4. The system-construction-procedure generating device according to claim 3, wherein
in case that the dependency relationship is added in the dependency relationship information,
when the added dependency relationship is the precedent status dependent or the reverse notification dependent, the operating procedure generating means updates the procedure sequence by moving the operation of the dependency source of the added dependency relationship next to the operation of the dependency destination, and repeating recursively to move an operation of the dependency source of the precedent status dependent or the reverse notification dependent having the moved operation as an operation of the dependency destination or an operation of the dependency destination of the reverse precedent status dependent or the notification dependent having the moved operation as an operation of the dependency source next to the moved operation for each of one or more operations between the dependency destination and the dependency source of the added dependency relationship, in the procedure sequence, and
when the added dependency relationship is the reverse precedent status dependent or the notification dependent, the operating procedure generating means updates the procedure sequence by moving the operation of the dependency source of the added dependency relationship previous to the operation of dependency destination, and repeating recursively to move an operation of the dependency source of the reverse precedent status dependent or the notification dependent having the moved operation as an operation of the dependency destination or an operation of the dependency destination of the precedent status dependent or the reverse notification dependent having the moved operation as an operation of the dependency source previous to the moved operation for each of one or more operations between the dependency destination and the dependency source of the added dependency relationship, in the procedure sequence.

5. The system-construction-procedure generating device according to claim 4, wherein
a set whose element is each operation which can be obtained by following a chain of dependency relationships is defined as an operation set,
the operating procedure storing means stores, for each of one or more operation sets, the procedure sequence indicating a sequence for performing each of one or more operations which are included in the operation set,
in case that the dependency relationship is added in the dependency relationship information,
when an operation set which include the operation of the dependency source of the added dependency relationship and an operation set which include the operation of dependency destination of the added dependency relationship are identical before adding, the operating procedure generating means updates the procedure sequence including the operation of the dependency source and the operation of the dependency destination of the added dependency relationship, and
when an operation set which include the operation of the dependency source of the added dependency relationship and an operation set which include the operation of dependency destination of the added dependency relationship are different before adding, the operating procedure generating means carries out integration into one procedure sequence by moving the procedure sequence, which includes the operation of the dependency source of the added dependency relationship, next to the procedure sequence, which includes the operation of the dependency destination, if the added dependency relationship is the precedent status dependent or the reverse notification dependent, and by moving the procedure sequence, which includes the operation of the dependency destination of the added dependency relationship, next to the procedure sequence, which includes the operation of the dependency source, if the added dependency relationship is the reverse precedent status dependent or the notification dependent.

6. The system-construction-procedure generating device according to claim 5, wherein
in case that the dependency relationship is deleted from the dependency relationship information,
when an operation set which include the operation of dependency source of the deleted dependency relationship and an operation set which include the operation of the dependency destination of the deleted dependency relationship are different after deleting, the operating procedure generating means divides the procedure sequence, which includes the operation of the dependency source and the operation of the dependency destination of the deleted dependency relationship, into a procedure sequence which includes the operation of dependency source and a procedure sequence which includes the operation of dependency destination.

7. The system-construction-procedure generating device according to any one of claims 1 to 6, further comprising:
an output means for generating and outputting a dependency relationship screen which displays each of the one or more dependency relationships included in the dependency relationship information in association with the operation of the dependency source and the operation of the dependency destination of the dependency relationship and a procedure screen which displays the procedure sequence, when the dependency relationship information and the procedure sequence are updated; and
an input means for receiving an input for adding or deleting of the dependency relationship on the dependency relationship screen, and updates the dependency relationship information.

8. A system-construction-procedure generating method comprising:
storing dependency relationship information indicating a dependency relationship for each of one or more pairs of operations among a plurality of operations each expressed with a combination of one of a plurality of program modules and one of a plurality of operation types, the plurality of operations being required for system construction;
storing a procedure sequence indicating a sequence for performing each of the plurality of operations; and
updating the procedure sequence in such a way that each of the one or more dependency relationships indicated by the dependency relationship information is satisfied, and outputting the updated procedure sequence, when the dependency relationship information is updated.

9. A computer readable storage medium recording thereon a program, causing a computer to perform a method comprising:
storing dependency relationship information indicating a dependency relationship for each of one or more pairs of operations among a plurality of operations each expressed with a combination of one of a plurality of program modules and one of a plurality of operation types, the plurality of operations being required for system construction;
storing a procedure sequence indicating a sequence for performing each of the plurality of operations; and
updating the procedure sequence in such a way that each of the one or more dependency relationships indicated by the dependency relationship information is satisfied, and outputting the updated procedure sequence, when the dependency relationship information is updated.
